Europäisches Patentamt

European Patent Office

Office européen des brevets

(11) Veröffentlichungsnummer: **0 282 477**
**B1**

(12) **EUROPÄISCHE PATENTSCHRIFT**

(45) Veröffentlichungstag der Patentschrift: **16.01.91**

(21) Anmeldenummer: **86905721.6**

(22) Anmeldetag: **23.09.86**

(86) Internationale Anmeldenummer:
**PCT/DE86/00386**

(87) Internationale Veröffentlichungsnummer:
**WO 87/03148 21.05.87 Gazette 87/11**

(51) Int. Cl.⁵: **H 02 K 23/04,** H 02 K 1/18,
F 02 N 11/00

(54) **ELEKTRISCHE MASCHINE, INSBESONDERE FÜR ANDREHVORRICHTUNGEN VON BRENNKRAFTMASCHINEN.**

(30) Priorität: **09.11.85 DE 3539851**

(43) Veröffentlichungstag der Anmeldung:
**21.09.88 Patentblatt 88/38**

(45) Bekanntmachung des Hinweises auf die
Patenterteilung:
**16.01.91 Patentblatt 91/03**

(84) Benannte Vertragsstaaten:
**DE FR GB IT**

(56) Entgegenhaltungen:
**EP-A-0 097 875**
**GB-A-2 130 810**
**US-A-4 071 794**

(73) Patentinhaber: **ROBERT BOSCH GMBH**
**Postfach 50**
**D-7000 Stuttgart 1 (DE)**

(72) Erfinder: **RÜHLE, Walter**
**Blumhardtweg 1**
**D-7015 Korntal (DE)**
Erfinder: **KLEINDIECK, Peter**
**Pommernstr. 6**
**D-7140 Ludwigsburg (DE)**
Erfinder: **ZIMMERMANN, Kurt**
**Frimleystr. 14**
**D-7120 Bietigheim (DE)**
Erfinder: **KROPP, Manfred**
**Hopfengarten 6**
**D-3201 Diekholzen 2 (DE)**

**Beschreibung**

Stand der Technik

Die Erfindung geht von einer elektrischen Maschine, insbesondere für Andrehvorrichtungen von Brennkraftmaschinen nach der Gattung des Hauptanspruchs aus. Aus der GB—A—21 30 810 ist eine elektrische Maschine bekannt, bei der die Permanentmagnete zwischen beide Stirnseiten umgreifende, kompliziert geformte Halteteile geklemmt sind. Die Halteteile dienen zugleich als Flußleitstücke. Außerdem müssen die Permamentmagnete eine besondere abgestufte Form haben, um die zugleich als Flußleitstück dienenden Halteteile an der den Luftspalt zum Anker begrenzenden Seite aufzunehmen. Außerdem ist aus der EP—B1—00 67 164 noch eine elektrische Maschine bekannt, bei der die Permanentmagnete durch Haltefedern im Gehäuse gehalten sind. Die Haltefedern sind zwischen jeweils zwei benachbarten Permanentmagneten angeordnet und haben an einer Stirnseite der Permanentmagnete federnd anliegende Federarme sowie Fixiermittel, um die Permanentmagnete in der richtigen Lage im Gehäuse zu halten. Durch den gezielt erzeugten Gewölbeeffekt ist bei dieser bekannten Ausführung keine zusätzliche Befestigung der Permanentmagnete im Gehäuse erforderlich. Werden bei der bekannten elektrischen Maschine die Permanentmagnete mit zugeordneten Flußleitstücken versehen, dann wirken auf die Flußleitstücke so große Radialkräfte in Richtung auf den Anker, daß die Haltefedern zusätzlich mit mindestens einem Niet im Gehäuse befestigt werden müssen, um die Permanentmagnete samt Flußleitstücken im Gehäuse zu halten. Eine solche Befestigung der Permanentmagnete mit den zugeordneten Flußleitstücken hat den Nachteil, daß sie zahlreiche Befestigungsteile in Form von Haltefedern und Nieten benötigt und zusammen mit hohen Montagekosten nicht mehr wirtschaftlich ist.

Aufgabe, Lösung und Vorteile der Erfindung

Der Erfindung liegt die Aufgabe zugrunde, eine elektrische Maschine der eingangs genannten Art zu schaffen, bei der die Permanentmagnete samt Flußleitstücken mit einfachen Mitteln sicher, jedoch lösbar im Gehäuse kostengünstig angeordnet und befestigt werden können.

Zur Lösung der Aufgabe sind die im Kennzeichen des Hauptanspruchs angegebenen Maßnahmen vorgesehen.

Dabei ist von Vorteil, daß zum sicheren Halten der Permanentmagnete mit zugeordneten Flußleitstücken lediglich zwei ringförmige Teile benötigt werden, die unabhängig von der jeweiligen Magnetlänge und von Rechts- oder Linkslauf der elektrischen Maschine verwendet werden können. Darüber hinaus bilden die Halteteile einen mechanischen Schutz der Magnete beim Fügen des Ankers in das Gehäuse der elektrischen Maschine.

Durch die in den Unteransprüchen aufgeführten Maßnahmen sind vorteilhafte Weiterbildungen der im Hauptanspruch angegebenen elektrischen Maschine möglich. Besonders vorteilhaft ist das Anformen von Halte-, Fixier- und toleranzausgleichenden Mitteln an den ringförmigen halteteilen, mit welchen ein Ring an Gehäusevorsprüngen lösbar einrasten kann, während der andere Ring federnde Vorsprünge zum Ausgleichen der verhältnismäßig großen Fertigungstoleranzen in Längsrichtung aufweist. Die ringförmigen Halteteile können dazu je nach Art und Beanspruchung der elektrischen Maschine aus Federstrahl, einem zähelastischen, wärmebeständigen Kunststoff oder Leichtmetall gebildet sein.

Zeichnung

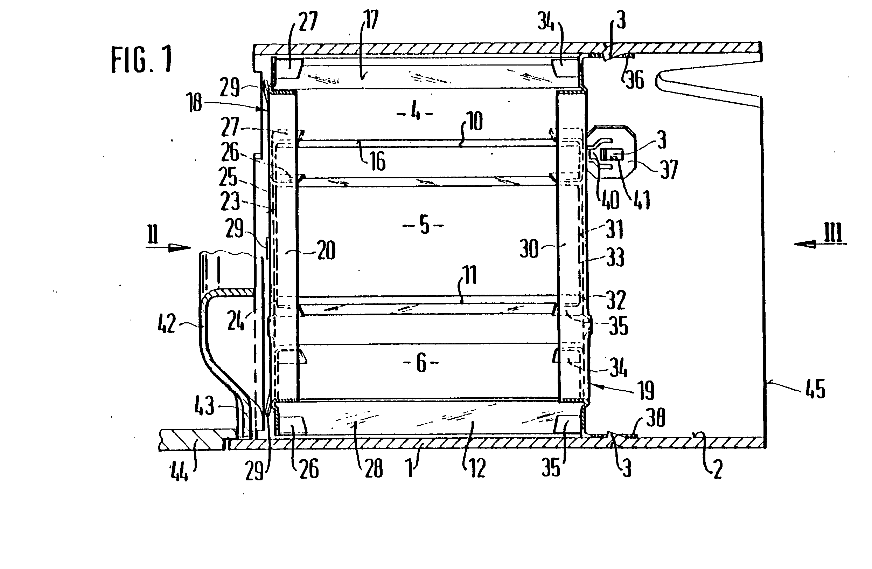

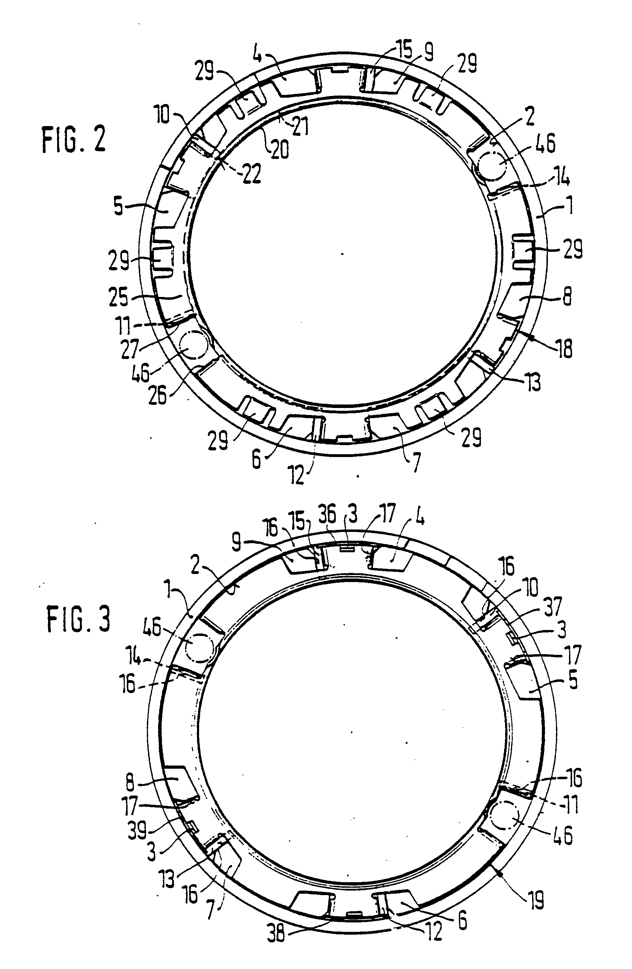

Ein Ausführungsbeispiel der Erfindung ist in der Zeichnung dargestellt und in der nachfolgenden Beschreibung näher erläutert. Es zeigen Figur 1 das Gehäuse einer elektrischen Maschine im Längsschnitt, Figur 2 eine Ansicht in Pfeilrichtung II und Figur 3 eine Ansicht in Pfeilrichtung III jeweils in Figur 1.

Beschreibung des Ausführungsbeispieles

In einem zylindrischen Gehäuse 1 einer elektrischen Maschine sind an der Innenwand 2 radial vorstehende Rastnasen 3 in einer Ebene senkrecht zur Längsaschse des Gehäuses 1 ausgebildet—beispielsweise durch Prägen. In dem Gehäuse 1 ist eine Magnetgruppe lösbar eingesetzt. Die Magnetgruppe ist aus drei Permanentmagnetpaaren gebildet, wobei jedem Permanentmagneten 4 bis 9 ein Flußleitstück 10 bis 15 zugeordnet ist. Die Permanentmagnete 4 bis 9 sind so gewölbt, daß ihre Außenseite der Innenwand 2 des Gehäuses 1 angepaßt ist. Je nach Drehrichtung des an sich bekannten und nicht näher dargestellten Ankers der elektrischen Maschine liegt das einem Permanentmagneten 4 bis 9 zugeordneten Flußleitstück 10 bis 15 an der einen oder anderen Längsseite 16 oder 17 des Permanentmagnete 4 bis 9 an.

Die Permanentmagnete 4 bis 9 samt Flußleitstücken 10 bis 15 sind mittels zweier federnder Halteteile als Magnetgruppe vormontiert. Die Halteteile bestehen aus zwei Ringen 18 und 19 beispielsweise aus Federstahl. Je nach Art und Beanspruchung können die Ringe auch als Formteile aus zähelastischem Kunststoff oder Leichtmetall wie Aluminium gebildet sein.

Der Ring 18 hat einen zylindrischen Abschnitt 20 auf dem je ein Randabschnitt der Innenseite 21 und 22 der Permanentmagnete 4 bis 9 bzw. der Flußleitstücke 10 bis 15 liegt, welcher an eine Stirnseite 23 und 24 der Permanentmagnete 4 bis 9, bzw. der Flußleitstücke 10 bis 15 grenzt.

Der Ring 18 hat einen flanschartigen Rand 25, welcher sich senkrecht zum zylindrischen Abschnitt 20 an die Stirnseite 23 bzw. 24 der Permanentmagnete 5 bis 9 und der Flußleitstücke 10 bis 15 erstreckt und an den Stirnseiten 23, 24 anliegt. Aus dem Rand 25 sind Lappen 26 und 27 freigestanzt und jeweils an die freie Längsseite 17 eines der Permanentmagnete 4 bis 9 bzw. an eine dem zugeordneten Permanentmagneten 4 bis 9 abgewandte Längsseite 28 eines der Flußleitstücke 10 bis 15 gebogen. Durch den Rand 25 und die Lappen 26 und 27 sind die Permanentmagnete 4 bis 9 samt Flußleitstücken 10 bis 15 in Längs- und Umfangsrichtung in ihrer Lage zueinander fixiert. Außerdem werden durch die Lappen 26, 27 die Flußleitstücke 10 bis 15 formschlüssig an dem jeweils zugeordneten Permanentmagneten 4 bis 9 gehalten.

Aus dem Rand 25 sind noch sechs von den Stirnseiten 23 und 24 axial wegstehende Federarme 29 herausgebogen. Deren Wirkungsweise ist weiter unten erläutert.

Der Ring 19 hat ebenfalls einen zylindrischen Abschnitt 30. Auf ihm ist je ein Randabschnitt der Innenseite 21 und 22 der Permanentmagnete 4 bis 9 bzw. der Flußleitstücke 10 bis 15 aufgenommen, welcher an die andere Stirnseite 31 und 32 der Permanentmagnete 4 bis 9, bzw. der Flußleitstücke 10 bis 15 grenzt.

Der Ring 19 hat ebenfalls einen flanschartigen Rand 33. Auch aus dem Rand 33 sind Lappen 34 und 35 freigestanzt und an die Längsseite 17 der Permanentmagnete 4 bis 9 bzw. an die Längsseite 28 der Flußleitstücke 10 bis 15 gebogen. Somit sind durch die Ringe 18 und 19 die Permanentmagnete 4 bis 9 mit den anliegenden Flußleitstücken 10 bis 15 als Magnetgruppe in ihrer Lage in Längs-, Umfangs- und Radialrichtung zueinander ausgerichtet, gehalten und als Baueinheit vormontiert. Außerdem bilden die Ringe 18, 19 besonders für die Stirnseitenbereiche der Magnetgruppe 4 bis 15, einen mechanischen Schutz beim Fügen der Magnetgruppe in das Gehäuse 1.

An dem Rand 33 des Rings 19 sind noch vier Befestigungslappen 36 bis 39 freigestanzt und senkrecht zum Rand 33, jedoch in entgegengesetzter Richtung zu den Lappen 34, 35 weggebogen. In jedem Befestigungslappen 36 bis 39 ist eine Federzunge 40 mit einem Schlitz 41 ausgebildet.

Die vormontierte Magnetgruppe 4 bis 15, 18, 19 wird in das Gehäuse 1 geschoben, bis die Befestigungslappen 36 bis 39 mit ihrer geschlitzten Federzunge 40 an den Rastnasen 3, welche an der Innenwand 2 des Gehäuses 1 radial vorstehen, einrasten. Die Magnetgruppe 4 bis 15, 18, 19 ist dadurch im Gehäuse 1 in ihrer Lage fixiert und lösbar befestigt. Das Gehäuse 1 ist gegenüber den Stirnseiten 23 und 24 sowie gegenüber dem Rand 25 des Ringes 18 mit einem Zwischenlager 42 abgedeckt, an dem sich die Federarme 29 des Ringes 18 abstützen. Das Zwischenlager 42 dient in an sich bekannter und nicht näher dargestellter Weise als Lagerstelle für die ebenfalls an sich bekannte und nicht näher dargestellte Ankerwelle der elektrischen Maschine. Das Zwischenlager 42 iste am Umfang mit Federzungen 43 versehen, welche zwischen den Stirnseiten des Gehäuses 1 und eines Antriebslagers 44 in an sich bekannter Weise angeordnet und befestigt sind. Im allgemeinen werden durch Zuganker 46 das Antriebslager 44 und ein an der Stirnseite 45 des Gehäuses 1 angeordnetes nicht dargestelltes Kommutatorlager am Gehäuse 1 befestigt. Für die durch die Magnetgruppe 4 bis 15, 18, 19 ragenden Zuganker 46 sind durch entsprechendes Wegbiegen von Lappenpaaren 26, 27 im Rand 25 des Ringes 18 sowie von Lappenpaaren 34, 35 im Rand 33 des Ringes 19 Durchgänge geschaffen. Die Lappenpaare 26, 27; 34, 35 dienen wiederum als mechanischer Schutz für die Permanentmagnete 4 bis 9 samt Leitstücken 10 bis 15 beim Fügen der Zuganker 46.

Bei bekannten Ausführungen ohne Zwischenlager ist das Antriebslager direkt am Gehäuse 1 angeordnet und die Federarme 29 stützen sich dann am Antriebslager ab.

**Patentansprüche**

1. Elektrisches Maschine, insbesondere für Andrehvorrichtungen von Brennkraftmaschinen, in deren Gehäuse (1) gewölbte Permanentmagnete (4—9) an der Innenwand (2) anliegen und jedem Permanentmagneten ein an einer seiner Längsseiten (16, 17) anliegendes Flußleitstück (10—15) zugeordnet ist, welche Permanentmagnete und Flußleitstücke mittels federnder Halteteile in ihrer in Umfangs- und Längsrichtung fixierten Lage im Gehäuse (1) befestigt sind, dadurch gekennzeichnet, daß die halteteile aus zwei Ringen (18 und 19) bestehen, die mit ihrem zylindrischen Abschnitt (20; 30) jeweils an an die Stirnseiten (23, 24; 31, 32) grenzenden Endabschnitte der Innenseite (21; 22) und mit ihrem flanschartigen Rand (25; 33) an den Stirnseiten (23, 24) jeweils der Permanentmagnete (4 bis 9) und Flußleitstücke (10 bis 15) anliegen, welcher Rand (25; 33) am Endabschnitt einer Längsseite jeweils eines der Permanentmagnete (4 bis 9) und eines benachbarten, einem anderen Permanentmagneten (4 bis 9) zugeordneten Flußleitstücks (10 bis 15) anliegende Haltevorsprünge (26, 27; 34, 35) hat, und einer der Ringe (18 oder 19) mit mindestens einem Vorsprung (36 bis 39) zum lösbaren Befestigen der Magnetanordnung (4 bis 15, 18, 19) im Gehäuse (1) versehen ist.

2. Elektrische Maschine nach Anspruch 1, dadurch gekennzeichnet, daß an der Innenwand (2) des Gehäuses (1) mindestens eine Rastnase (3) angeformt ist, an der der mindestens eine Vorsprung (35 bis 39) des einen Ringes (19) einrastbar ist, während am anderen Ring (18) mindestens ein dessen Randabschnitt (25) axial überragender Vorsprung (29) sich an einem an der Stirnseite des Gehäuses (1) angeordneten Zwischenlager (42) oder Antriebslager abstützt.

3. Elektrische Maschine nach Anspruch 1, dadurch gekennzeichnet, daß die Ringe (18; 19) aus Federstahl bestehen.

4. Elektrische Maschine nach Anspruch 1, dadurch gekennzeichnet, daß die Ringe (18; 19) als Formteile aus zählelastischem Kunststoff ausgebildet sind.

5. Elektrische Maschine nach Anspruch 1, dadurch gekennzeichnet, daß die Ringe (18, 19) als Spritzgußteile aus Leichtmetall ausgebildet sind.

## Revendications

1. Machine électrique, notamment pour des dispositifs de démarrage de moteurs à combustion interne, machine dans laquelle des aimants permanents cintrés (4 à 9) s'appliquent contre la paroi interne (2) du boîtier (1) de la machine, tandis qu'à chaque aimant permanent est associée une pièce conductrice (10 à 15) du flux magnétique, s'appliquant contre un de ses côtés longitudinaux (16, 17), ces aimants permanents et ces pièces conductrices du flux étant fixés dans le boîtier (1) en position périphérique et longitudinale au moyen de pièces de maintien élastiques, machine électrique caractérisée en ce que les pièces de maintien sont constituées par deux anneaux (18 et 19) qui s'appliquent par leurs parties cylindriques (20; 30) respectivement sur les parties terminales, adjacentes aux faces frontales (23, 24; 31, 32), de la face interne (21; 22) et par leurs bords en forme de collerette (25; 33) sur les faces frontales (23, 24) respectivement des aimants permanents (4 à 9) et des pièces conductrices du flux (10 à 15), ce bord (25; 33) ayant des saillies de maintien (26, 27; 34, 35) s'appliquant contre la partie d'extrémité d'un côté longitudinal respectivement d'un des aimants permanents (4 à 9) et d'une pièce conductrice du flux (10 à 15) voisine, associée à un autre aimant permanent (4 à 9), et un des anneaux (18 ou 19) étant muni d'au moins une saillie (36 à 39) pour fixer de façon amovible, l'ensemble des aimants (4 à 15, 18, 19) dans le boîtier (1).

2. Machine électrique selon la revendication 1, caractérisée en ce que sur la paroi interne (2) du boîtier (1) est formé, au moins, un taquet de verrouillage (3) sur lequel est susceptible d'être verrouillée l'une des saillies (35 à 39) de l'un (19) des anneaux, tandis que sur l'autre anneau (18) au moins une saillie (29), dépassant axialement de la partie de bordure (25) de cet anneau, prend appui contre un palier intermédiaire (42) ou un palier d'entraînement disposé contre la face frontale du boîtier (1).

3. Machine électrique selon la revendication 1, caractérisée en ce que les anneaux (18; 19) sont en acier à ressort.

4. Machine électrique selon la revendication 1, caractérisée en ce que les anneaux (18; 19) sont des pièces de forme en une matière plastique visco-élastique.

5. Machine électrique selon la revendication 1, caractérisée en ce que les anneaux (18; 19) sont des pièces de forme moulées par injection en métal léger.

## Claims

1. Electrical machine, in particular for starting devices of internal combustion engines, in the housing (1) of which arched permanent magnets (4—9) abut against the inner wall (2) and a flux-conducting piece (10—15) abutting against one of its longitudinal sides (16, 17) is assigned to each permanent magnet, which permanent magnets and flux-conducting pieces are secured in their position fixed in circumferential and longitudinal direction in the housing (1) by means of resilient holding parts, characterized in that the holding parts consist of two rings (18 and 19) which abut with their cylindrical section (20; 30) in each case against the end sections of the inside (21; 22) bordering on the end sides (23, 24; 31, 32) and with their flange-like edge (25; 33) abut against the end sides (23, 24) in each case of the permanent magnets (4 to 9) and flux-conducting pieces (10 to 15), which edge (25, 26) has holding projections (26, 27; 34, 35) abutting against the end section of a longitudinal side in each case of one of the permanent magnets (4 to 9) and of an adjacent flux-conducting piece (10 to 15) assigned to another permanent magnet (4 to 9), and one of the rings (18 or 19) is provided with at least one projection (36 to 39) for the detachable securing of the magnetic arrangement (4 to 15, 18, 19) in the housing (1).

2. Electrical machine according to Claim 1, characterized in that at least one locking nose (3) is formed onto the inner wall (2) of the housing (1), against which locking nose the at least one projection (35 to 39) of the one ring (19) can be engaged, whilst at the other ring (18) at least one projection (29) projecting axially over the edge section (25) of said ring is supported on an intermedcate bearing (42) or drive bearing arranged on the end side of the housing (1).

3. Electrical machine according to Claim 1, characterized in that the rings (18; 19) consist of spring steel.

4. Electrical machine according to Claim 1, characterized in that the rings (18; 19) are constructed as preforms of viscoplastic plastic.

5. Electrical machine according to Claim 1, characterized in that the rings (18, 19) are constructed as injection moulded parts of light metal.

FIG. 1

FIG. 2

FIG. 3